Europäisches Patentamt

European Patent Office

Office européen des brevets

(11) Publication number: **0 400 768**
**A1**

## EUROPEAN PATENT APPLICATION

(21) Application number: **90300111.3**

(22) Date of filing: **05.01.90**

(51) Int. Cl.⁵: **B27B 17/12**

(30) Priority: **30.05.89 US 358086**

(43) Date of publication of application:
**05.12.90 Bulletin 90/49**

(84) Designated Contracting States:
**DE FR GB IT SE**

(71) Applicant: **BLOUNT, INC.**
**4909 S.E. International Way**
**Portland Oregon 97201(US)**

(72) Inventor: **Lane, Ronald D.**
**429 Sixth St.**
**Lake Oswego Oregon 97034(US)**

(74) Representative: **Jones, Ian et al**
**POLLAK MERCER & TENCH High Holborn**
**House 52-54 High Holborn**
**London WC1V 6RY(GB)**

(54) **Chain saw.**

(57) A chain saw having an outboard mounted centrifugal clutch adapted to drive an automatic lubricating pump. A cavity (11) is formed in the portion of the housing from which the drive shaft (12) protrudes. A worm gear (14) for activating the lubrication pump is mounted in the cavity. A combination seal and worm gear drive member (34) is slidably fitted on the adapter (30) of the clutch cup (32) with a worm gear driver portion (37) engaged with the worm gear. A disc shaped seal portion includes a lip (40) that fits into a groove (16) surrounding the cavity and is held in place through engagement of the worm gear driver with the worm gear.

FIG. 1

EP 0 400 768 A1

# CHAIN SAW

This invention relates to a chain saw, and more specifically to a chain saw having an automatic lubricating system whereby a lubricant is pumped to the saw chain and guide bar in response to engagement of a clutch for driving the saw chain.

In motorized chain saws, an endless chain propelled by a drive sprocket coupled to a centrifugal clutch is guided so as to travel in a groove formed in an elongate guide bar. The saw chain is guided to travel in the groove of the guide bar in a sliding metal-to-metal contact. To prevent the build up of heat due to the sliding metal-to-metal contact, which could damage both the saw chain and guide bar, and also to reduce friction, the lubricating system is incorporated within the chain saw housing. The lubricating system has a reservoir for providing a supply of lubricant oil to a pump mechanism which when driven delivers the oil to an aperture in the side wall of the groove of the guide bar via a connecting passageway, thereby supplying the oil to the saw chain and the groove of the guide bar.

The lubricating systems of most chain saws are automatic, that is, oil is supplied to the saw chain and guide bar only when the saw chain is propelled by the engagement of the centrifugal clutch. To provide this automatic feature, the pump is driven by being coupled to the centrifugal clutch through which the saw chain is propelled.

In a common arrangement, the lubricating pump is coupled to the centrifugal clutch by means of a worm gear driven by a threaded hub driven by the shaft of the driven clutch cup. This shaft is commonly referred to as the adapter in that it adapts a particular drive sprocket to the standard chain saw drive. The worm gear driver meshes with the worm gear, and when rotated by the clutch cup, it in turn rotates the worm gear which drives the pump mechanism.

Since chain saws are operated in an environment where wood chips, sawdust and other debris are always present, a seal is provided to protect the pump drive components from these elements. The seal is typically a plastics circular disc that is mounted to rotate with the clutch cup shaft or adapter. The disc has a protruding lip on its periphery and a metal washer is sometimes used between the seal disc and the face of the housing, which has a circular groove or recess within which the lip of the seal is designed to rotate to cooperatively seal out the debris.

The mounting of the seal disc in the fashion described above has some shortcomings. The adapter and the clutch cup to which it is rigidly attached is permitted by design to have some axial float on the drive shaft of the chain saw. Because the seal disc is carried by the adapter, it will float or move away from the housing face. Such movement of the seal away from the housing face provides a space for the entrance of wood chips, dust, etc. into the pump drive mechanism. The seal could also become partially dislodged from its frictional mount and therefore would wobble during rotation and provide an opening for entrance of wood chips, etc.

The present invention therefore provides a single member that combines the functions of generating or transmitting the drive for the lubricating pump and providing a seal around the pump to protect against dust and dirt contamination.

The present invention accordingly provides an improved retention of the rotary seal that protects the pump drive mechanism from the contaminants of the operating environment, the improved retention being accomplished by integrating the worm driver and the seal into a unit and thereby utilizing the axial force caused by the rotational resistance of the worm gear acting on the helix of the worm driver.

The invention results in improved operation and reduced costs. The single member is thought to be less expensive to produce than the separate elements of the prior art, and it is easier to assemble into the chain saw.

The invention thus provides an effective seal for a chain saw oil pump drive mechanism, as is necessary due to the operating environment in which operation of the chain saw occurs.

The invention is further explained below, by way of example, with reference to the accompanying drawings, in which:

Fig. 1 is an exploded side view of components of a chain saw in which the present invention is embodied;

Fig. 2 similarly illustrates prior art components some of which are replaced in accordance with the present invention;

Fig. 3 is a front view of integral gear driver and seal member included in the components of Fig. 1;

Fig. 4 is a sectional view taken on lines 4-4 of Fig. 3;

Fig. 5 is a rear view of the integral gear driver and seal member taken on view line 5-5 of Fig. 4;

Fig. 6 is an exploded perspective view illustrating the cutting chain and associated components of the chain saw in relation to the components of Fig. 1; and

Fig. 7 is a view similar to that of Fig. 1 but showing the components assembled.

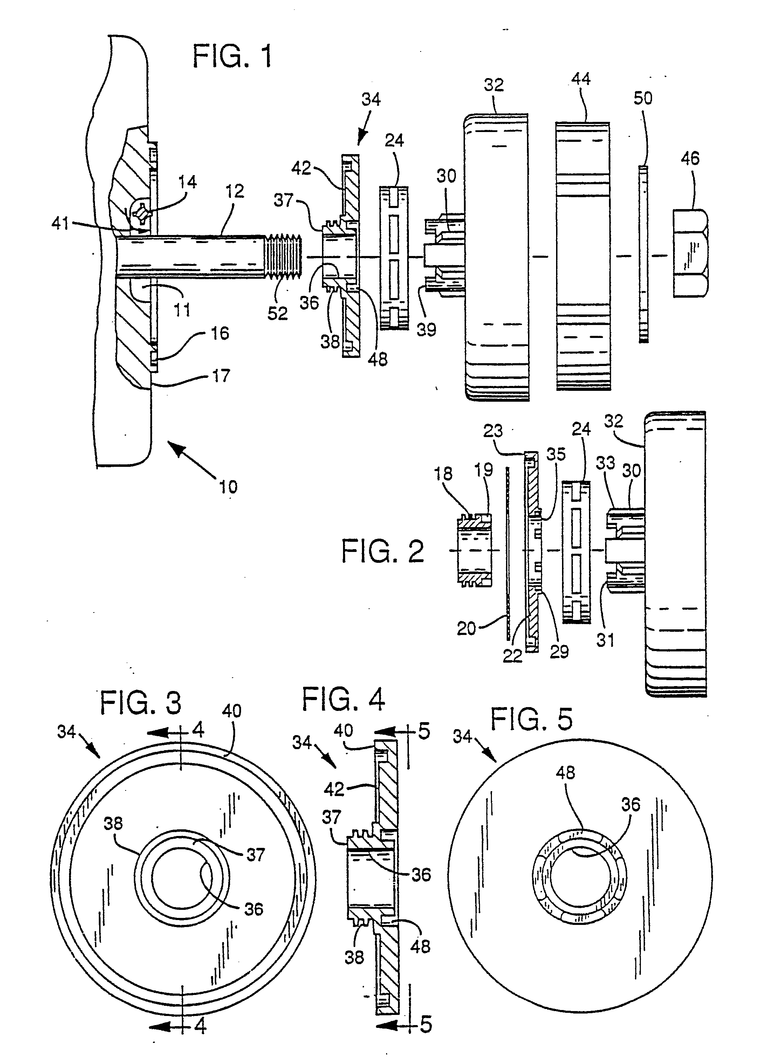

With reference to the drawings, Fig. 1 is an exploded view of a chain saw housing 10 and adjacent components. A cavity 11 is formed in a face 17 of the housing 10 around an output or drive shaft 12 protruding outwardly therefrom. An annular groove 16 concentric with the rotational axis of the output shaft 12 and surrounding the cavity 11 is also formed in the face 17. Rotatably mounted above and transverse to the output shaft 12, but within the cavity 11, is an oil pump worm gear 14.

These components of a chain saw are typical of conventional chain saws having an outboard clutch mechanism. Fig. 2 illustrates related conventional components employed in the prior art that connect to the drive shaft 12 for driving the saw chain. These components include a worm gear driver 18 that fits loosely over the shaft 12 and engages the worm gear 14 shown in Fig. 1. A metal washer 20 surrounds the worm gear driver 18 and a plastics seal 22 with an annular lip 23 also surrounds the worm gear driver and the washer 20 in a manner that permits the annular lip to ride in the groove 16 in the housing face 17. An adapter 30 of a clutch cup 32 is configured with external splines 33 engaging a rim sprocket 24 for driving a saw chain and spline grooves 35 of a rearwardly protruding flange 29 of the seal 22. The seal 22 is thus caused to be rotated with rotation of the clutch cup 32. Lug portions 31 on the end of the adapter 30 are configured to project into receiving slots 19 in the worm gear driver 18.

As will be apparent, the worm gear driver 18 is rotatably driven by the adapter 30 and the seal 22 is also rotatably driven by adapter 30, but the seal and the worm gear driver are independent of each other. As previously mentioned, the clutch cup 32 and its adapter 30 are designed to have slight axial movement relative to shaft 12. The worm gear driver 18 is engaged with worm gear 14 so that it seeks to pull the worm gear toward the driver (or vice versa) by forcing rotation in a counter-clockwise direction as viewed in Fig. 1, indicated by arrow 41. Thus, gear driver 18 does not move with the axial movement of the adapter 30. As the adapter 30 is pulled away from the worm gear driver 18, the lug portions 31 can become disengaged from the slots 19, particularly as the tips of the lug portions 31 and/or the slots 19 become worn. As concerns seal 22, as the adapter 30 is pulled away from the housing, the seal will move away from the groove 16 to expose the cavity 11 and the worm gear 14 to the debris generated during the cutting action. Both of these undesired occurrences are remedied or relieved in accordance with the present invention which will now be explained.

An integral combination member 34 functioning as a gear driver, a seal and a washer is illustrated in Figs. 1, 3, 4, 5 and 7. The member 34 is configured to comprise an annular disc portion having a cylindrical hub 37 protruding axially from its inner face 42. The disc and hub are concentric to a common bore 36 which is sufficiently large to provide a loose fit of the member 34 on the output shaft 12.

Screw threads 38 are formed on the protruding hub 37 so that this can function as a worm gear driver portion of the member 34, providing the driver action of previously described member 18 of Fig. 2. The screw threads 38 mesh with the oblique grooves of the worm gear 14. There is a lip 40 at the periphery of the disc portion of member 34 which protrudes beyond the inner face 42 and enters the annular groove 16 of the chain saw housing face 17 when the member is mounted on the output shaft 12. The lip 40 is narrower and shallower than the annular groove 16, so that when the lip enters the groove 16, it is not in physical contact with either the side edges or the bottom of the groove.

Drive slots 48 as shown in Figs. 4 and 5 are inset into the face of the member 34 opposite the protruding hub 37. The drive slots 48 are configured and positioned to be aligned and positively engaged by the protruding drive lugs 39 of the clutch cup adapter 30. The drive slots 48 have a sufficient depth to permit axial float of the driving lugs 39 of the clutch adapter 30, without changing the axial position of the member 34, the driving lugs 39 being sufficiently long to provide positive engagement with the drive slots within the limits of the axial float of the adapter.

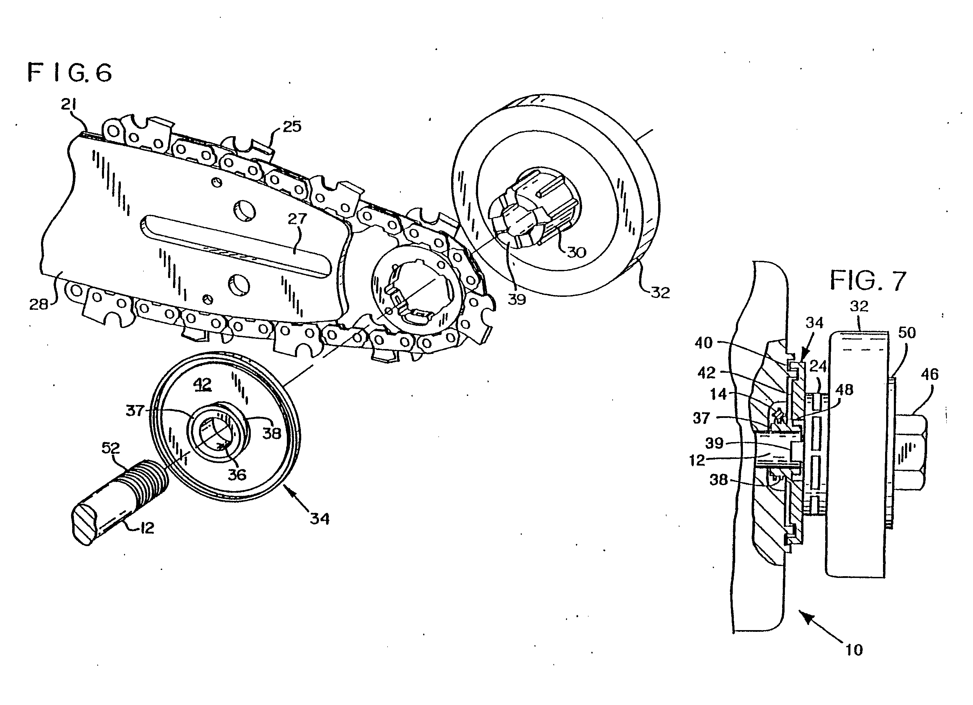

With particular reference to Figs. 1 and 7, the member 34 is placed on the output shaft 12, with the threads 38 of the worm gear driver hub 37 engaging and meshed with the worm gear 14. When the worm gear driver constituted by the hub 37 and the threads 38 meshes with worm gear 14, the lip 40 of the member 34 simultaneously enters the annular groove 16 of the housing face 17, and also positions the inner face 42 in close proximity to the chain saw housing face 17.

The overall assembly of the chain saw and driver components is shown in the perspective exploded view of Fig. 6. A guide bar 28 is rigidly fastened to the chain saw housing by bolts protruded through a mounting slot 27. An endless saw chain 25 is positioned in the guide slot 21 on the periphery of the guide bar 28. The rim sprocket 24 is mounted to the adapter 30 of the clutch cup, adjacent one end of the guide bar 28. The clutch cup 32 with the adapter 30 is positioned on the output shaft 12, with the rim sprocket 24 fitting in splined engagement on the adapter 30. The protruding drive lugs 39 of the adapter 30 are aligned and enter the drive slots 48 (not shown in Fig. 6) of the member 34. Rigidly attached to the output shaft 12 is a centrifugal clutch mechanism 44 (inside the clutch cup 32) which engages and rotatively drives the clutch cup.

When assembled, as shown in Fig. 7, the clutch mechanism 44 located inside the cup 32 is retained on the shaft 12 by a nut 46, outboard of a washer 40, screwed onto a screw thread 52 on the end of the shaft.

When the output shaft 12 exceeds a predetermined RPM, the centrifugal clutch mechanism 44 frictionally engages the wall of the clutch cup 32 to rotate the clutch cup, the adapter, the rim sprocket which drives the saw chain, and the member 34. The rotation of the member 34 provides rotary motion to the worm gear 14 through the screw threads 38 on the hub 37 which drives the oil pump mechanism (not shown). The interengagement of the screw threads 38 with the worm gear 14 also urges the member 34 axially toward the housing 10, thereby maintaining the sealing interconnection between lip 40 of the member 34 and the groove 16 of the housing. The member 34 is retained in position against the housing 10 regardless of the axial float of the clutch cup 32 and adapter 30.

It will be appreciated that the saw chain 25 may inadvertently jump off the sprocket 24 during use of the chain saw and might come into contact with the member 34. To reduce the risk of damage to the member 34 in such circumstances, the member is advantageously made of rigid material, so as to be capable of resisting deformation.

The invention can be embodied in a variety of ways other than as specifically described above without departing from the scope of the invention as defined in the following claims.

**Claims**

1. A chain saw comprising a housing (10) having an annular groove (16) surrounding a cavity (11), a drive or output shaft (12) protruding from the cavity, a pump gear (14) for receiving a drive for a lubricating pump, the pump gear being mounted in the cavity adjacent the output shaft, a centrifugal clutch mechanism (44) mounted on the outboard end of the output shaft, a clutch cup (32) surrounding the centrifugal clutch, a hub adapter (30) having a splined exterior protruding from the clutch cup toward the housing, the adapter surrounding the output shaft and having limited axial movement along the shaft, and a sprocket (24) mounted on the splined exterior of the hub adapter, characterised by a combination member (34), the combination member having a disc-like seal portion integral with a hub-shaped gear driver portion (37), an annular lip (40) protruding from the seal portion, and a center opening (36) surrounding the output shaft (12), and slidable interlock means (39,48) slidably interlocking the combination member with the adapter (30), the gear driver portion being engaged with the pump gear so as to drive the pump gear when the clutch cup (32) is driven by the centrifugal clutch mechanism (44), and the annular lip (40) protruding into the groove (16) of the housing.

2. A chain saw as claimed in claim 1 wherein the slidable interlock means includes configured slots (48) formed into the face of the combination member (34) opposite the gear driver portion (37), and lugs (39) projecting from the end of the adapter (30), the lugs (39) being configured to project into the slots (48) to force rotation of the combination member with rotation of the clutch cup and to slidingly engage in the slots to retain the locking interrelationship while permitting limited relative axial sliding movement between the adapter and the combination member.

3. A chain saw as claimed in claim 1 or 2 wherein the sprocket is a rim sprocket (24), a guide bar (28) projects from a position adjacent the rim sprocket, and a saw chain (25) is driven by the sprocket around the guide bar in a manner such that the saw chain may inadvertently jump off the sprocket to impact the combination member (34), the combination member being made of rigid material to resist deformation by the saw chain in such event.

4. A chain saw as claimed in claim 1, 2 or 3 wherein the pump gear is a worm gear (14) and the gear driver portion has screw threads (38) engaging the worm gear, whereby turning forces exerted on the worm gear due to screw action draw the combination member (34) toward the housing (10), thereby maintaining the lip (40) within the groove (16).

FIG. 1

FIG. 2

FIG. 3

FIG. 4

FIG. 5

| | **DOCUMENTS CONSIDERED TO BE RELEVANT** | | EP 90300111.3 |
|---|---|---|---|
| Category | Citation of document with indication, where appropriate, of relevant passages | Relevant to claim | CLASSIFICATION OF THE APPLICATION (Int. Cl⁵) |
| X | DE - A - 1 528 028 (STIHL) * Totality * | 1,2,3 | B 27 B 17/12 |
| X | US - A - 3 530 957 (SHAW) * Totality * | 1 | |
| | | | **TECHNICAL FIELDS SEARCHED (Int Cl⁵)** |
| | | | B 23 D 57/00 B 27 B 17/00 |

The present search report has been drawn up for all claims

| Place of search | Date of completion of the search | Examiner |
|---|---|---|
| VIENNA | 07-03-1990 | KRUMPSCHMID |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82